(19) Europäisches Patentamt
European Patent Office
Office européen des brevets

(11) **EP 1 808 967 A1**

(12) **EUROPEAN PATENT APPLICATION**

(43) Date of publication:
**18.07.2007 Bulletin 2007/29**

(51) Int Cl.:
*H04B 1/707* (2006.01) *G01S 1/00* (2006.01)

(21) Application number: **07100502.9**

(22) Date of filing: **12.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **12.01.2006 US 330122**

(71) Applicant: **Honeywell International Inc.
Morristown, NJ 07962 (US)**

(72) Inventor: **Simpson, Robert G.
Ellicott City, MD 21042 (US)**

(74) Representative: **Haley, Stephen
Gill Jennings & Every LLP
Broadgate House
7 Eldon Street
London EC2M 7LH (GB)**

(54) **A method for code alignment for DSSS signal processing**

(57) An embodiment (800) generally relates to a method of processing direct-sequence spread spectrum signals for temporal alignment between a received direct sequence spread spectrum (DSSS) signal and a local reference signal. The method includes receiving the received DSSS signal with bandwidth to resolve at least N samples per code chip (905) and de-spreading the received DSSS signal to recover an elemental waveform within the received DSSS signal for an interval greater than one code chip interval as a first processing stage (910). The method also includes determining a discriminator value based on the elemental waveform as a second processing stage (920) and operating a delay-locked loop based on the discriminator value to adjust an alignment between the received DSSS signal and the local reference signal (925).

FIG. 1

EP 1 808 967 A1

**Description**

The subject matter of this disclosure generally relates to direct sequence spread spectrum ("DSSS") signals. More particularly, the subject matter of this disclosure pertains to methods and systems that can provide alignment for a received DSSS signal.

The global positioning system (GPS) may be used for determining the position of a user on or near the earth, from signals received from multiple orbiting satellites. The orbits of the GPS satellites are arranged in multiple planes, in order that signals can be received from at least four GPS satellites at any selected point on or near the earth.

Each satellite transmits two spread-spectrum signals in the L band, known as L1 and L2, with separate carrier frequencies. L1 is at a nominal center frequency of 1575.42 MHz and L2 at 1227.60 MHz. The two signals are used to eliminate errors that may arise due to the dispersion of the transmuted signals by the ionosphere. Each satellite uses at least one of two pseudorandom noise (PRN) codes that are unique to that satellite to modulate its carrier signals, This allows the L-band signals from a number of satellites to be individually identified and separated in a receiver. Each carrier is also modulated by a slower-varying data signal defining the satellite orbits and other system information. One of the PRN codes is referred to as the C/A (coarse/acquisition) code, while the second is known as the P (precise) code.

Two signals are broadcast on the L1 frequency, a coarse acquisition (C/A) and an encrypted precision ranging P(Y) code. The C/A code is typically delayed by 90 degrees in carrier phase from the P(Y) code. The C/A code is a PRN Gold code epoch of 1023 chips, run at a chipping rate of 1.023 MHz, resulting in a null-to-null bandwidth of 2.046 MHz and a repetition rate of 1 millisecond. The C/A code is used to synchronize the receiver with the longer P(Y) code, which is generated by the Modulo-2 addition (i.e., a logical Exclusive OR operation) of two code sequences of 15,345,000 chips and 15,345,037 chips, respectively. Different satellites will have different sequences. This gives the P(Y) code a period of 7 days. At a chipping rate of 10.23 MHz, the P(Y) code has a nuil-to-null bandwidth of 20.46 MHz. The system broadcasts only the P(Y) code on the L2 frequency.

In the conventional GPS receiver, replicas of the P-code and C/A code may be locally generated in the same manner as in the satellite. The L1 and L2 signals from a given satellite are demodulated by aligning the phases, i.e., by adjusting the timing, of the locally-generated codes to match those modulated onto the signals from that satellite. In order to achieve such phase alignment, the received GPS signal is typically correlated with a locally generated reference code that contains values of either "1" or "-1". Within each chip of the replica code, there will be multiple sampled points, and for all such points, the value is constant. A single correlation value is computed for a given temporal alignment between the received signal and the replica code. Correlator values for three different temporal alignments, usually referred to as early, prompt and late correlation values, are typically computed. These values fall appropriately along a triangle function whose full width is twice the width of the code chip. The misalignment may be determined form this triangle function.

Conventional GPS receivers suffer a number of drawbacks and disadvantages. For instance, one problem relates to the accurate phase and frequency tracking of the received signals. Another drawback pertains 10 the correction of relative divergence between the received signals and the local PRN code signal generators in the presence of ionospheric distortion. In addition, because GPS systems depend upon direct line of sight for communication propagation, any multipath fading can further distort received signal timing estimates.

An embodiment generally relates to a method of processing direct-sequence spread spectrum signals for temporal alignment between a received direct sequence spread spectrum (DSSS) signal and a local reference signal. The method includes receiving the received DSSS signal with bandwidth to resolve at least N samples per code chip and de-spreading the received DSSS signal to recover an elemental waveform within the received DSSS signal for an interval greater than one code chip interval as a first processing stage. The method also includes determining a discriminator value based on the elemental waveform as a second processing stage and operating a delay-locked loop based on the discriminator value to adjust an alignment between the received DSSS signal and the local reference signal.

It is to be understood that both the foregoing general description and the following detailed description are Exemplary and explanatory only and are not restrictive of the invention, as claimed.

**In the Drawings;**

The accompanying drawings, which are incorporated in and constitute a part of this specification, illustrate several embodiments of the invention and together with the description, serve to explain the principles of the invention.

FIG. 1 illustrates a seven chip segment of a Gold code;

FIG. 2 illustrates a waveform of the correlation of the Gold code with a local reference code as a function of the amount of misalignment;

FIG. 3 illustrates an example of a sampling local reference code;

FIG. 4 illustrates the waveform of a de-spread DSSS signal;

FIG. 5A illustrates a recovered elemental waveform in temporal alignment;

FIG. 5B illustrates a recovered elemental waveform in temporal misalignment;

FIG. 6 illustrates an example of analysis windows over the elemental waveform;

FIG 7 illustrates a plot of the squared error as a function of misalignment;

FIG. 8 illustrates a block diagram of a GPS receiver in accordance with an embodiment of the invention; and

FIG. 9 illustrates a flow diagram in accordance with another embodiment.

For simplicity and illustrative purposes, the principles of the present invention are described by referring mainly to exemplary embodiments thereof. However, one of ordinary skill in the art would readily recognize that the same principles are equally applicable to, and can be implemented in, all types of direct sequence spread spectrum ("DSSS") systems, and that any such variations do not depart from the true spirit and scope of the present invention. Moreover, in the following detailed description, references are made to the accompanying figures, which illustrate specific embodiments. Electrical, mechanical, logical and structural changes may be made to the embodiments without departing from the spirit and scope of the present invention. The following detailed description is, therefore, not to be taken in a limiting sense and the scope of the present invention is defined by the appended claims and their equivalents.

Embodiments pertain generally to a method of processing a received DSSS signal. More particularly, embodiments may be configured to recover an elemental waveform from the received DSSS signal and use minimum prediction error techniques on the recovered elemental waveform to determine a temporal alignment factor for the received DSSS signal relative to a local reference code (or local code replica).

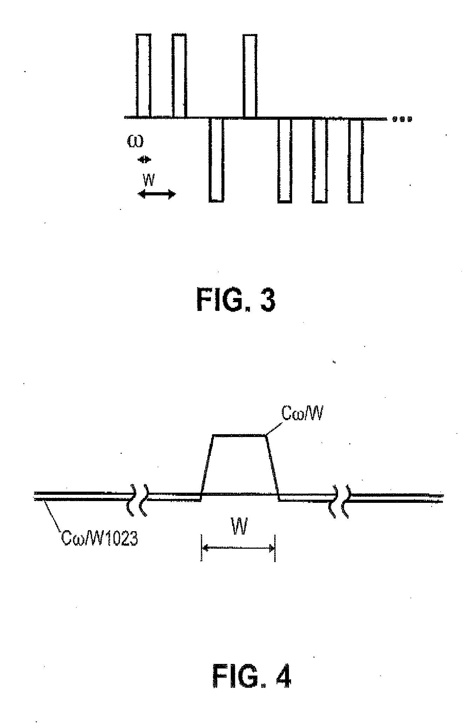

The correlation of the arriving signal with the sampling local reference code of Fig. 3 to produce the recovered elemental waveform can be accomplished in a mathematically equivalent manner as follows. An m-number of accumulators may be allocated, where m may have a value in the range from one to N. Each accumulator may be associated with a respective interval in the recovered elemental waveform. Assuming that there are N samples across a code chip in the arriving signal, we process the arriving signal in segments that are N samples long. We let n indicate the sample number within each of these segments, with $1 \leq n \leq N$. Each nth sample of a segment is multiplied by a local reference code corresponding to that segment and the resulting product is added to the nth accumulator. For example, the first sample of each arriving signal segment is multiplied by the corresponding local reference code and the 1023 resulting products are then accumulated in the first accumulator. Similarly, the second sample of each arriving signal segment is multiplied by the corresponding local reference code and the 1023 resulting products are then accumulated in the second accumulator, and so forth. The accumulated products form a central portion of the elemental waveform.

In addition, the local reference code may be advanced by one chip in conjunction with a second set of m accumulators, and the process of sampling and accumulating products is repeated to form an early portion of the recovered waveform. The local reference code may be delayed by one chip in conjunction with a third set of m accumulators and the process of sampling and accumulating products is repeated to form a late portion of the recovered elemental waveform. The early, central, and late portions of the recovered elemental waveform may be concatenated to form the recovered elemental waveform. The resulting waveform contains a sequence of 3N values within which there is a rectangular function that is one-chip wide with a temporal location that depends on the time of the arrival of the signal.

Subsequently, the resulting rectangular function may be used to generate a prediction error that involves all the data from the recovered elemental waveform. The generated prediction errors may be configured to be input to a discriminator function. The values of the discriminator function feed a code loop filter which then determines the temporal alignment of the local reference code and the received DSSS signal.

Reference will now be made in detail to the present exemplary embodiments of the invention, examples of which are illustrated in the accompanying drawings. Wherever possible, the same reference numbers will be used throughout the drawings to refer to the same or like parts.

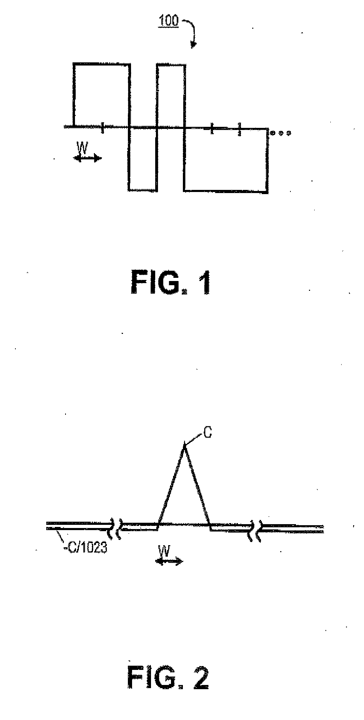

Embodiments of the invention resolve the alignment factor in a DSSS signal based on a signal power representation of the DSSS signal and minimum error prediction techniques. More particularly, a DSSS signal is modulated by a binary shift code that flips from a value of "1" to a value of "minus 1" following a pattern determined by a particular pseudorandom noise code known as the Gold code. The Gold codes used, for example in a GPS system, consist of 1023 values. The code sequences through all 1023 values in one millisecond, and then the cycle begins again. FIG 1 illustrates a partial example of a Gold code. As shown in FIG. 1, a seven-chip segment of a 1023 chip Gold code modulation function is depicted. As described previously, the code lakes on values of one or minus one. Each chip has a time width of w. The local reference code is produced in the same way with identical results.

A property of these Gold codes is that when one such codes is correlated with a time-shifted replica of itself, the correlation value is very large when there is no time shift and very much smaller when the codes are shifted out of alignment. Thus, when a DSSS signal, e.g., a GPS signal, containing a particular Gold code is correlated with a local copy of the same code, a large value results when the codes are in alignment as illustrated in FIG. 2. As shown in FIG. 2, this graph may depict the cross correlation of the 1023-Gold chip modulation function with the local replica code. When perfectly aligned, the value is 1023 times as large as the value when things are misaligned by more than one chip. For misalignments less than a chip, the correlation decreases linearly as the amount of misalignment increases, resulting in the triangular response near the point of alignment. This triangular behavior is a direct result of the finite rectangular width of each chip.

In some embodiments, there is an implicit assumption that the DSSS signal e.g., a GPS signal, is being processed with sufficient bandwidth that the appropriate Nyquist sampling rate provides N samples across a code chip. N needs to be greater than just one or two for adequate resolution of the code chip, but it need not be really large, as the satellite transmitter that produced the signal has only so much bandwidth. Reasonable values of N might fall in the range 10 to 100.

Without altering the modulation of the DSSS signal, the local reference codes (or local replica code) may be altered, as depicted in FIG. 3. As shown in FIG. 3, a seven-chip portion of the 1023 chips of the local replica code is depicted. The local replica code has the the same chipping rate as the C/A code but each chip has a duty cycle such that it has a non-zero value for only a fraction of the chip interval. When this local replica code is correlated with the DSSS signal, the correlation result is shown in FIG. 4.

As shown in FIG. 4, the resulting waveform has a 1023 boost in the signal level value and a rectangular response near the vicinity of perfect alignment instead of a triangular response. In other words, the correlation property of the Gold codes is being used to collapse the DSSS signal back into a despread signal.

Assume that there are N samples across a chip interval and consider for a moment just the deterministic behavior of the signal, i.e., ignore noise for the present. When the code epoch in the DSSS signal is aligned with the local reference code (or local replica code) in the prompt or center response, there are N possible nonoverlapping positions of the sampling local reference code, similar to the one shown in Fig. 3, that align with the code epoch in the DSSS signal. This may produce N values across the chip for the prompt response. The left and the right responses will each produce N values that are 1023 times smaller than the prompt response because they are not in proper alignment.

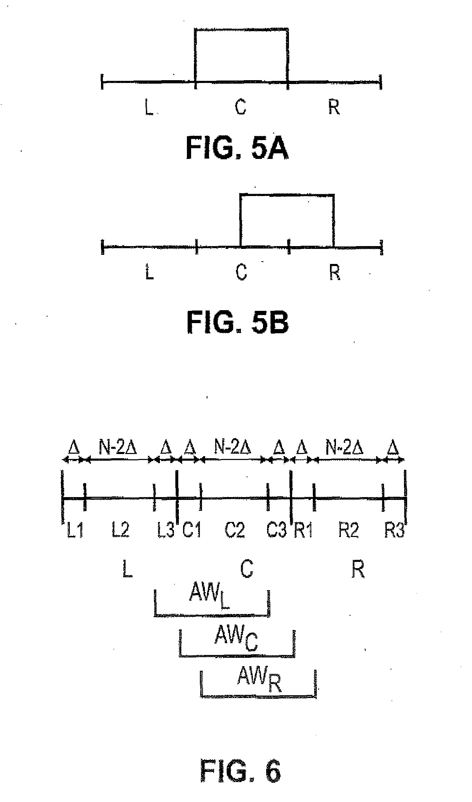

If the code epoch of the received signal is misaligned with the local code in the prompt response by half a chip, the prompt response will now have N/2 samples that are the same as before and N/2 samples that are 1023 times smaller. Depending on the direction of the shift, one of the other responses (left or right) will now have N/2 large values and N/2 small values while the remaining responses (right or left) will have all small values. If the responses are placed next to each other as in FIG. 5 the original rectangle located in the aligned prompt response simply moves left or right depending on the amount of misalignment.

As shown in FIG. 5, the segment marked L contains the N recovered waveform sample values when the local code is one chip advanced compared to the local code used in segment C. The segment marked R contains the N recovered waveform sample values when the local code is one chip delayed compared to the local code used in segment C. For FIG. 5a, the arriving modulation code is properly aligned with the local code used to produce segment C. For FIG. 5b, the arriving modulation code is delayed one-half chip relative to the local code used to produce segment C. As a result, some of the resulting correlation output then shows up in section C and some in Section R.

With this observation as a starting point, a prediction error can be introduced that will be minimum when the local replica code and the arriving signal are properly aligned. For a properly aligned signal, the rectangle should be in the center position. A predicted signal can be defined as follows: sum the contents of the central N prompt response and divide by N to get the predicted value for the central, N values. Moreover, assume that the predicted value for the N outputs on the left response and on the right response is simply zero. The subtraction of the predicted signal from the actual signal over the entire 3N responses produces a collection of errors and the sum of the squares of these errors produces a total squared prediction error.

Similarly, two additional square prediction errors may be determined by using either the left or the right N values to get a predicted signal level. When the code is correctly aligned in the center response N outputs, the prediction will be zero and the prediction error will be a maximum. When there is partial misalignment, so that some of the large values fall in either the chip to the left or the chip to the right, the alignment will produce an intermediate nonzero error that increases as the amount of misalignment increases.

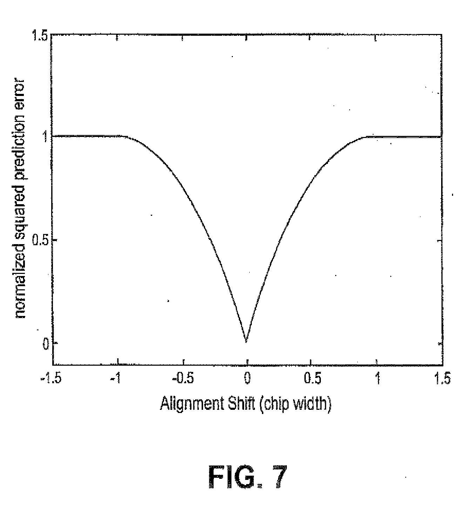

This basic description of the process is modified slightly to reduce the impact of noise in regions where there should be no signal, and to simplify the calculations. Accordingly, the concept of an analysis window that is N samples wide is introduced. In the preceding discussion, these analysis windows would have been shifted by N samples with respect to their neighbor, with no overlap between these analysis windows. However, the separation between the analysis windows may be reduced, thus, allowing an overlap in the analysis windows. Three such analysis windows ($AW_L$, $AW_C$ and $AW_R$) with a separation of $\triangle$ are indicated in Figure 6. For each analysis window, a mean value of the samples within the window may be calculated. The mean value of the samples may be subtracted from all the signal values in that analysis window and leave the values outside that analysis window unchanged. The resulting values are squared, and then the squared error over the entire region defined by the union of the three analysis windows is then summed. This combined error may be referred to as the squared prediction error. Again, ignoring noise and focusing on the deterministic signal results in a squared prediction error that behaves as a function of misalignment as shown in Figure 7.

As shown in FIG. 7, the graph has a minimum when there is no misalignment, and as the misalignment increases, the squared error increases. It can be shown that this error behaves in a quadratic manner, but note the orientation of the quadratic. It is not quadratic with respect to the misalignment, which may be designated as d; instead it is a quadratic of the form $A - B(d-1)^2$ for $1 > d > 0$ and $A - B(d-1)^2$ for $(-1 < d < 0)$, where d has been normalized to the chip width and A and B are appropriate scaling factors (which factor out, as described in greater detail below).

Three squared error terms may be generated, one when the left analysis window is used to produce a predicted signal, one when the center analysis window is used, and one when the right analysis window is used. In all cases, the error is computed across all samples contained in the region obtained by forming the union of the three analysis windows.

Assume now that the analysis windows are spaced by an amount $\Delta$ and that the code epoch is shifted by an amount $d$ to the right relative to the center analysis window. The three resulting squared prediction errors may be referred to as left error, center error and right error, or $\varepsilon_L^2$, $\varepsilon_C^2$ and $\varepsilon_R^2$ for short.

Under these assumptions, the three errors take on the forms

$$\varepsilon_L^2 = A - B(d - \Delta + 1)^2 \qquad -\Delta < d < \Delta \tag{1}$$

$$\varepsilon_C^2 = A - B(|d| - 1)^2 \qquad -\Delta < d < \Delta \tag{2}$$

$$\varepsilon_R^2 = A - B(d + \Delta - 1)^2 \qquad -\Delta < d < \Delta \tag{3}$$

The absolute value sign in the expression for $\varepsilon_C^2$ requires some finesse when doing the algebra described in subsequent sections. This may be resolved simply as follows. The difference between $\varepsilon_L^2$ and $\varepsilon_R^2$ is to be computed, and if the difference is positive, then d must be negative and conversely if the difference is negative, then d must be positive. This simple check is adequate to resolve this ambiguity.

At this point, since the appropriate value of $\Delta$ is known and the squared prediction error values $\varepsilon_L^2$, $\varepsilon_C^2$ and $\varepsilon_R^2$ from the GPS signal data having been obtained, there are three equations and three unknowns, namely $A$, $B$ and $d$. After some straightforward but tedious algebra, one finds the following solution for $d$ in terms of $\varepsilon_L^2$, $\varepsilon_C^2$ and $\varepsilon_R^2$:

$$
\begin{aligned}
d &= \frac{\Delta(2 - \Delta)(\varepsilon_L^2 - \varepsilon_R^2)}{2\Delta(\varepsilon_L^2 - \varepsilon_C^2) + 2(2 - \Delta)(\varepsilon_C^2 - \varepsilon_R^2)} \qquad 0 < d < \Delta \quad or \quad (\varepsilon_L^2 - \varepsilon_R^2) \le 0 \\[2mm]
&= \frac{\Delta(2 - \Delta)(\varepsilon_L^2 - \varepsilon_R^2)}{2\Delta(\varepsilon_R^2 - \varepsilon_C^2) + 2(2 - \Delta)(\varepsilon_C^2 - \varepsilon_L^2)} \qquad -\Delta < d < 0 \quad or \quad (\varepsilon_L^2 - \varepsilon_R^2) \ge 0
\end{aligned}
\tag{4}
$$

In order to maintain agreement with how things have been defined with other discriminator functions used in DSSS processing (for example, satellite positioning data processing), the discriminator function may be derived from multiplying the expression for $d$ (Eq. 4) by 2. This will cause the discriminator to swing from a value of -1 to +1 as the misalignment changes from -1/2 to +1/2, as is the typical case with other discriminator functions used in GPS code lock loops. The resulting expression then becomes

$$
\frac{\Delta(2 - \Delta)(\varepsilon_L^2 - \varepsilon_R^2)}{\Delta(\varepsilon_L^2 - \varepsilon_C^2) + 2(2 - \Delta)(\varepsilon_C^2 - \varepsilon_R^2)} \qquad 0 < d < \Delta \quad or \quad (\varepsilon_L^2 - \varepsilon_R^2) \le 0
$$

$$\tag{5}$$

$$
\frac{\Delta(2 - \Delta)(\varepsilon_L^2 - \varepsilon_R^2)}{\Delta(\varepsilon_R^2 - \varepsilon_C^2) + 2(2 - \Delta)(\varepsilon_C^2 - \varepsilon_L^2)} \qquad -\Delta < d < 0 \quad or \quad (\varepsilon_L^2 - \varepsilon_R^2) \ge 0
$$

In removing the carrier frequency from the GPS signal GPS receivers will sometimes make use of what are called quadrature signal components. To get the in-phase component, the GPS signal is multiplied by a cosine function with the appropriate frequency, while the quadrature phase component is obtained by using the related sine function. When quadrature signal components are used, one must compute the squared prediction errors as described above for each of the two components separately and then add the two errors to get the total error terms that should be used in the discriminator function.

Equivalently, complex-valued signals may be used, complex-valued errors computed and the modulus squared of the complex-valued errors may be used in lieu of handling the I and Q channels separately. Accordingly, $\varepsilon_i^2$ may be replaced with $|\varepsilon_i|^2$, $i = \{L, R, C\}$ in the above equations to allow for complex-valued signals. In the event that only the I or Q signal is to be processed, the expressions may be straightforwardly reduced to the appropriate real-valued expressions.

In order to obtain the discriminator function output, the incoming GPS data may be manipulated to obtain three prediction-error-related terms, namely $|\varepsilon_L|^2 - |\varepsilon_R|^2$, $|\varepsilon_L|^2 - |\varepsilon_C|^2$, and $|\varepsilon_C|^2 - |\varepsilon_R|^2$. These can be obtained in a direct manner following the description of these various terms given above. But more efficient computational can be devised and one way to accomplish this is presented here.

Let the symbol $s_i$, represent a sample value from a GPS signal. In some embodiments, a general case may be considered where $s_i$ is complex valued, with real part equal to the in-phase (1) component and imaginary part equal to the quadrature-phase (Q) component. These and subsequent Expressions can be reduced to the individual I or Q expressions by simply zeroing the component that is of no interest. Five sums are defined that are taken over the five regions labeled L3, C1, C2, C3 and R1 in Figure 6. The symbol $S_{L3}$ may be defined to represent the sum over the L3 region, which can be expressed as

$$S_{L3} = \sum_{i \in L3} s_i \, . \tag{6}$$

The other four quantities, $S_{C1}$, $S_{C2}$, $S_{C3}$, and $S_{R1}$, are defined similarly:

$$S_{C1} = \sum_{i \in C1} s_i \tag{7}$$

$$S_{C2} = \sum_{i \in C2} s_i \tag{8}$$

$$S_{C3} = \sum_{i \in C3} s_i \tag{9}$$

$$S_{R1} = \sum_{i \in R1} s_i \, . \tag{10}$$

With these definitions, the prediction error can be expressed when the subregions L3, C1 and C2 are used to form the predicted value as follows, where N is the number of sample points across a complete code chip:

$$
\begin{aligned}
|\varepsilon_L|^2 = & \sum_{i \in L3} \left| s_i - \frac{S_{L3} + S_{C1} + S_{C2}}{N} \right|^2 + \sum_{i \in C1} \left| s_i - \frac{S_{L3} + S_{C1} + S_{C2}}{N} \right|^2 \\
& + \sum_{i \in C2} \left| s_i - \frac{S_{L3} + S_{C1} + S_{C2}}{N} \right|^2 + \sum_{i \in C3} |s_i|^2 + \sum_{i \in R1} |s_i|^2
\end{aligned} \tag{11}
$$

Similarly, $\varepsilon_C{}^2$ and $\varepsilon^2{}_R$ are defined as

$$\left|\varepsilon_C\right|^2 = \sum_{i \in L3}\left|s_i\right|^2 + \sum_{i \in C1}\left|s_i - \frac{S_{C1}+S_{C2}+S_{C3}}{N}\right|^2 + \sum_{i \in C2}\left|s_i - \frac{S_{C1}+S_{C2}+S_{C3}}{N}\right|^2$$
$$+ \sum_{i \in C3}\left|s_i - \frac{S_{C1}+S_{C2}+S_{C3}}{N}\right|^2 + \sum_{i \in R1}\left|s_i\right|^2 \tag{12}$$

$$\left|\varepsilon_R\right|^2 = \sum_{i \in L3}\left|s_i\right|^2 + \sum_{i \in C1}\left|s_i\right|^2 + \sum_{i \in C2}\left|s_i - \frac{S_{C2}+S_{C3}+S_{R1}}{N}\right|^2 + \sum_{i \in C3}\left|s_i - \frac{S_{C2}+S_{C3}+S_{R1}}{N}\right|^2$$
$$+ \sum_{i \in R1}\left|s_i - \frac{S_{C2}+S_{C3}+S_{R1}}{N}\right|^2 \tag{13}$$

The first of these expressions can be expanded and terms combined to obtain:

$$\left|\varepsilon_L\right|^2 = \sum_{i \in L3}\left|s_i\right|^2 - \frac{2\,\mathrm{Re}\left[S_{L3}^*\left(S_{L3}+S_{C1}+S_{C2}\right)\right]}{N} + \frac{N_{L3}\left|\left(S_{L3}+S_{C1}+S_{C2}\right)\right|^2}{N}$$
$$+ \sum_{i \in C1}\left|s_i\right|^2 - \frac{2\,\mathrm{Re}\left[S_{C1}^*\left(S_{L3}+S_{C1}+S_{C2}\right)\right]}{N} + \frac{N_{C1}\left|\left(S_{L3}+S_{C1}+S_{C2}\right)\right|^2}{N}$$
$$+ \sum_{i \in C2}\left|s_i\right|^2 - \frac{2\,\mathrm{Re}\left[S_{C2}^*\left(S_{L3}+S_{C1}+S_{C2}\right)\right]}{N} + \frac{N_{C2}\left|\left(S_{L3}+S_{C1}+S_{C2}\right)\right|^2}{N} \tag{14}$$
$$+ \sum_{i \in C3}\left|s_i\right|^2 + \sum_{i \in R1}\left|s_i\right|^2$$
$$= \sum_{i \in L3,C1,C2,C3,R1}\left|s_i\right|^2 - \frac{\left|\left(S_{L3}+S_{C1}+S_{C2}\right)\right|^2}{N}$$

Similar results follow for $\varepsilon_C{}^2$ and $\varepsilon_R{}^2$ :

$$\left|\varepsilon_C\right|^2 = \sum_{i \in L3,C1,C2,C3,R1}\left|s_i\right|^2 - \frac{\left|\left(S_{C1}+S_{C2}+S_{C3}\right)\right|^2}{N} \tag{15}$$

$$\left|\varepsilon_R\right|^2 = \sum_{i \in L3,C1,C2,C3,R1}\left|s_i\right|^2 - \frac{\left|\left(S_{C2}+S_{C3}+S_{R1}\right)\right|^2}{N} \tag{16}$$

These expressions may be placed into the formula for the discriminator function, eliminating terms that cancel out to arrive at the following expression for the discriminator function. As a note, the value of d may be positive or negative, so we have two cases to consider. When $(S_{C2}+S_{C3}+S_{R1}|^2-|S_{L3}+S_{C1}+S_{C2}|^2) \leq 0$, the following equation is used:

$$\frac{\Delta(2-\Delta)\left(\left|S_{C2}+S_{C3}+S_{R1}\right|^2-\left|S_{L3}+S_{C1}+S_{C2}\right|^2\right)}{\Delta\left(\left|S_{C1}+S_{C2}+S_{C3}\right|^2-\left|S_{L3}+S_{C1}+S_{C2}\right|^2\right)+(2-\Delta)\left(\left|S_{C2}+S_{C3}+S_{R1}\right|^2-\left|S_{C1}+S_{C2}+S_{C3}\right|^2\right)} \quad (17)$$

and when $(|S_{C2}+S_{C3}+S_{R1}|^2-|S_{L3}+S_{C1}+S_{C2}|^2)>0$, Equation (18) is used

$$\frac{\Delta(2-\Delta)\left(\left|S_{C2}+S_{C3}+S_{R1}\right|^2-\left|S_{L3}+S_{C1}+S_{C2}\right|^2\right)}{\Delta\left(\left|S_{C1}+S_{C2}+S_{C3}\right|^2-\left|S_{C2}+S_{C3}+S_{R1}\right|^2\right)+(2-\Delta)\left(\left|S_{L3}+S_{C1}+S_{C2}\right|^2-\left|S_{C1}+S_{C2}+S_{C3}\right|^2\right)} \quad (18)$$

By further algebraic manipulation, some additional terms may be eliminated to arrive at the following final version for the discriminator function. When

$$\mathrm{Re}\left[\left(S_{C3}^*+S_{R1}^*\right)\left(2S_{C2}+S_{C3}+S_{R1}\right)-\left(S_{L3}^*+S_{C1}^*\right)\left(S_{L3}+S_{C1}+2S_{C2}\right)\right]\leq 0, \text{ Equation 19 may be used:}$$

$$\frac{\Delta(2-\Delta)\mathrm{Re}\left[\left(S_{C3}^*+S_{R1}^*\right)\left(2S_{C2}+S_{C3}+S_{R1}\right)-\left(S_{L3}^*+S_{C1}^*\right)\left(S_{L3}+S_{C1}+2S_{C2}\right)\right]}{\Delta\mathrm{Re}\left[S_{C3}^*\left(2S_{C1}+S_{C2}\right)+S_{C3}^*-S_{L3}^*\left(S_{L3}+2S_{C1}+S_{C2}\right)\right]+(2-\Delta)\mathrm{Re}\left[S_{R1}^*\left(2S_{C2}+S_{C3}\right)+S_{R1}^*-S_{C1}^*\left(S_{C1}+2S_{C2}+S_{C3}\right)\right]} \quad (19)$$

and when $\mathrm{Re}\left[\left(S_{C3}^*+S_{R1}^*\right)\left(2S_{C2}+S_{C3}+S_{R1}\right)-\left(S_{L3}^*+S_{C1}^*\right)\left(S_{L3}+S_{C1}+2S_{C2}\right)\right]>0,$ Equation 20 may be used:

$$\frac{\Delta(2-\Delta)\mathrm{Re}\left[\left(S_{C3}^*+S_{R1}^*\right)\left(2S_{C2}+S_{C3}+S_{R1}\right)-\left(S_{L3}^*+S_{C1}^*\right)\left(S_{L3}+S_{C1}+2S_{C2}\right)\right]}{\Delta\mathrm{Re}\left[S_{C1}^*\left(2S_{C2}+S_{C3}\right)+S_{C1}^*-S_{R1}^*\left(S_{R1}+2S_{C2}+S_{C3}\right)\right]+(2-\Delta)\mathrm{Re}\left[S_{L3}^*\left(2S_{C1}+S_{C2}\right)+S_{L3}^*-S_{C1}^*\left(S_{C3}+2S_{C1}+S_{C2}\right)\right]} \quad (20)$$

This latter pair of expressions contains a number of common groupings of terms that need only be computed once, so it's not quite as complicated as it first appears. In fact, this latter term can be computed with 12 additions/subtractions and 10 multiply/divides, as compared to 10 additions/subtractions and 7 multiply/divides for the former expression.

In conventional GPS receivers, non-uniform antenna response functions can cause variable amplitudes in the received signals. As a result, lower signal amplitudes may produce proportionally smaller discriminator values and the reverse for higher amplitude signals. As known to those skilled in the art, discriminator values drive the code lock loop and the non-normalized behavior of the discriminator affects the performance of the code lock loop.

However, the discriminator function defined by equations 19 and 20 is normalized in such a way that a change in the signal amplitude has no effect on the discriminator value, More particularly, the numerator and denominator change by the same factor when the signal amplitude changes, leaving the discriminator unaffected by the signal amplitude. Moreover, in the ideal deterministic case where each chip is a proper rectangle function, this discriminator function is perfectly linear in its response as the misalignment varies over the distance separating the left and right analysis windows.

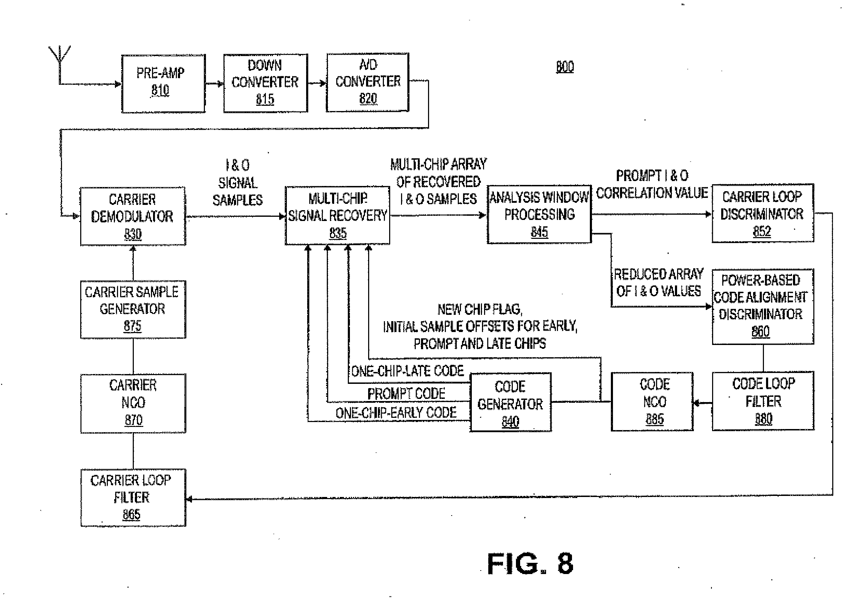

FIG. 8 illustrates a block diagram of a GPS receiver 800 in accordance with an embodiment of the invention. It should be readily apparent to those of ordinary skill in the art that the block diagram depicted in FIG. 8 represents a generalized schematic illustration and that other components may be added or existing components may be removed or modified. Moreover, the GPS receiver 800 may be implemented using software components, hardware components, or a combination thereof.

As shown in FIG. 8, the GPS receiver 800 may include an antenna 805, pre-amp module 810, a down conversion 815, an analog/digital ("A/D") converter 820 and a carrier demodulator 830. A GPS signal may be received at the antenna 805 and the received GPS signal strength increased by the pre-amp module 810. The GPS signal is down converted by the down converter module 815 and inputted to the A/D converter 820. The output signal of the A/D converter is a digital representation of the received GPS signal from its analog form. The digital GPS signal may then have the carrier wave removed by the carrier demodulator 830. The carrier demodulator 830 may also be configured to sample the I and Q components of the GPS signal. The I and Q digital samples may then be inputted into the multi-chip signal recovery module 835. In some embodiments, the bandwidth of the GPS signal is sufficient to resolve more than one sample per code chip.

The multi-chip signal recovery module 835 may be configured to be part of a first stage processing of the GPS signal. The C/A code in the GPS signal is an example of a DSSS signal. In order to utilize the C/A code, the received GPS signal must be de-spread via the previously described method for recovering the elemental chip waveform in order for the signal to be detected in the presence of noise. Due to the practicality of the temporal misalignment, the correlation between the arriving signal and the sampling local reference code of the type shown in Fig. 3 must be performed over a range of relative alignments that cover more than a single chip interval in order to obtain the required despread or recovered element waveform data. In some embodiments, three chip intervals of recovered signal may be used to determine the temporal alignment between a received DSSS signal and the local replica code. In other embodiments, two chip intervals of recovered signal may be used.

For the three chip situation: a central set of m accumulators may used with the received DSSS signal and the prompt local replica code to produce the central portion of the recovered elemental waveform; an early (or left) set of m accumulators may use the received DSSS signal and the early replica code, that is, the prompt local replica code advanced by one chip, to produce the early (or left) portion of the recovered elemental waveform; and a late (or right) set of m accumulators may use the received DSSS signal and the late replica code, that is, the prompt local replica code delayed by one chip, to produce the late (or right) portion of the recovered elemental waveform.

Accordingly, in one embodiment, the multi-chip signal recovery module 835 may use three sets of m accumulators to generate a de-spread GPS signal for an interval three code chips in duration, i.e. a recovered elemental waveform. In other words, the de-spread data as the recovered elemental waveform may represent a signal amplitude representation of the code chip embedded in the received GPS signal.

For the three-chip recovery processes, there are three sets of m-accumulators, where in some embodiments m may be equivalent to N, the number of samples. The 3*m number of accumulators may be implemented as a part of the registers in a digital signal processing chip, an application specific integrated circuit, allocated in software, or combinations thereof. Each accumulator in each set of m-accumulators may be associated with a position in the recovered elemental waveform. For example, the first accumulator in the center recovery process may be associated with the first sample position of the center portion of the recovered elemental waveform. Similarly, the second accumulator of the late recovery process may be associated with the second sample position of the late portion of the recovered elemental waveform, and so on.

For the center portion of the recovered waveform, the first signal sample that arrives immediately after the start of a new chip in the local reference code will be multiplied by the current value of the local reference code and the product accumulated in the first of the m accumulators associated with the center portion of the recovered waveform. The second signal sample that arrives after the start of a new chip in the local reference code will be multiplied by the current value of the local reference code and the product accumulated in the second of the m accumulators associated with the center portion of the recovered waveform. As a general rule, the nth sample after the start of a new chip in the local reference code will be multiplied by the current value of the local reference code and the product accumulated in the nth of the m accumulators, where n may vary between $1 \leq n \leq m$.

For the early portion of the recovered waveform, a similar process to the central portion of the recovered waveform may be performed except that the local replica code has been advanced by one chip. Accordingly, the nth sample after the start of a new chip in the local reference code is multiplied by the current value of the one-chip-advanced local reference code and the product accumulated in the nth-accumulator in the accumulator set associated with the early portion of the recovered waveform, where n may vary between $1 \leq n \leq m$. For the late portion of the recovered waveform, the local replica code has been delayed by one chip. Thus, the nth sample after the start of a new chip in the local reference code is multiplied by the current value of the one-chip-delayed local reference code and the produces accumulated in the nth accumulator in the accumulator set associated with the late portion of the recovered waveform, where n may vary between $1 \leq n \leq m$.

The multi-chip signal recovery module 835 may also be configured to form the recovered elemental waveform from the accumulated results contained in the early, center and late portions of the recovered waveform. More particularly, the multi-chip signal recovery module 835 may concatenate the early, center and late portions of the recovered waveform in that particular sequence. These concatenated portions of the recovered elemental waveform may be forwarded to the analysis window processing module 845.

In this particular embodiment, the output of just one one-chip portion of the recovered waveform may be insufficient to predict the alignment of the de-spread C/A code chip. If the C/A code chip is properly aligned, the central one-chip portion would be sufficient. However, in practicality, the C/A code chip signal is typically shifted left or right by some offset. As a result, the neighboring data may provide a determination of whether the C/A code chip has shifted or is properly aligned.

In some embodiments, the determination of alignment may be accomplished using just two one-chip portions of the recovered waveform, where the local reference code is a half-chip early in the first recovery process and the local reference code is a half-chip delayed in the second recovery process. In these embodiments, the properly aligned de-spread C/A code chip may fall directly in the middle of the 2N-long data set provided by the two-chip recovery processes. Once initial signal acquisition has occurred and the C/A signal is being tracked, the misalignment errors are typically less than half-a-chip and the two-chip recovery process can provide enough data for processing.

For the process that uses only two chips-worth of recovered data, the recovery of the elemental waveform is similar to the three-chip recovery processes. Each one-chip recovery process may be allocated m accumulators, where each accumulator is associated with a position in the recovered elemental waveform. In the early portion of the recovered data, the local replica code is advanced by a half-chip. The nth sample after the start of a prompt local reference code chip is multiplied by the current value of the one-half-chip early local reference code and the product accumulated in the nth of the m accumulators associated with the first of the two sets of m accumulators, where n may vary between $1 \leq n \leq m$. In the late portion of the recovered data, the local replica code is delayed by a half-chip. The nth sample after the start of a prompt local reference code chip is multiplied by the current value of the one-half-chip late local reference code and the product accumulated in the nth of the m accumulators associated with the second of the two sets of m accumulators, where n may vary between $1 \leq n \leq m$. The early and late portions of the recovered waveform may then be concatenated to form a 2N-long data set and forwarded to the analysis window processing module 845.

The multi-chip recovery module 835 may further receive signals from the code NCO module 850. These signals may comprise of a new chip flag, an initial sample offsets for early, prompt and late chips. These signals may also be input to the code generator 840.

The analysis window processing module 840 may be configured to generate the prompt I & Q correlation values to be inputted to the carrier loop discriminator 855 and a reduced array of I & Q values to a power-based code alignment discriminator 860. More particularly, the analysis window processing module 840 may be configured to receive the recovered elemental waveform from the three-chip (or two-chip) recovery processes that represent the signal amplitude representations of the recovered I and Q samples.

The analysis window processing module 840 may be further configured to use analysis windows in the processing of the combined data array. More particularly, an analysis window of N samples wide may be formed by the analysis window processing module 840. The analysis window processing module 840 may then overlay three analysis windows over the recovered elemental waveform as previously depicted in FIG. 6. For convenience sake, the three analysis windows may be referred to as $AW_L$ 605, $AW_C$ 610, and $AW_R$ 615. In some embodiments, the three analysis windows overlap with a separation of $\Delta$. In other embodiments, the $\Delta$ between $AW_L$ and $AW_C$ may not be equivalent to the $\Delta$ between $AW_C$ and $AW_L$.

The $AW_L$ 605 comprises of subsegments L3, C1, and C2. Similarly, $AW_C$ 610 comprises of C1, C2, and C3 and $AW_R$ 615 comprises of C2, C3, and R1.

The carrier loop discriminator 855 may be configured to determine the phase of the carrier signal that carried the GPS signal. The phase may then be forwarded to the carrier loop filter 865, where the output is fed into the carrier numerical controlled oscillator ("NCO") 870. The carrier NCO 865 may become the timing signal for the carrier sample generator 875.

The analysis window processing module 845 may yet be further configured to sum the values of subsegments, L3, C1, C2, C3, and R1. More particularly, using L3 as an illustrative example, the analysis window processing module 845 may sum the data contained in the L3 subsegment and refer to this sum as $S_{L3}$. Similarly, the data contained in the respective subsegments of C1-C3 and R1 are summed as $S_{C1}$, $S_{C2}$, $S_{C3}$, and $S_{R1}$, respectively. The five sums may be referred to as a reduced array of I & Q values, which is then forwarded to the power-based code alignment discriminator 860.

The power-based code alignment discriminator 860 may be configured to generate an alignment factor that is forwarded to the code loop filter 880. The alignment factor may then be used by the code loop filter 880, the code NCO 850 and code generator 840 to align the GPS signal.

The power-based code alignment discriminator 860 may generate the alignment factor based on a discriminator function that was previously expressed in equations 19 and 20. The mathematical basis for this discriminator function has been described previously in greater detail.

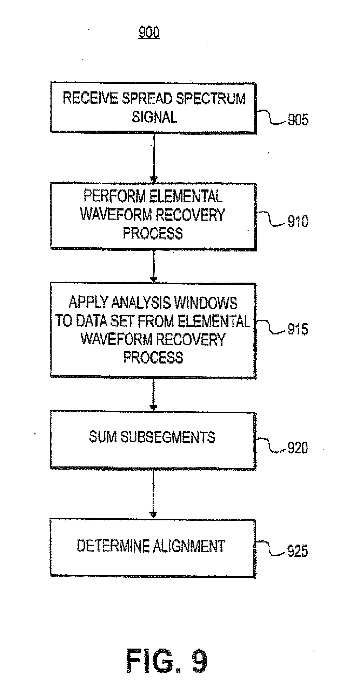

FIG. 9 illustrates an exemplary flow diagram in accordance to another embodiment of the invention. It should be readily apparent to those of ordinary skill in the art that the flow diagram 900 depicted in FIG. 9 represents a generalized schematic illustration and that other steps may be added or existing steps may be removed or modified.

As shown in FIG. 9, the multi-chip recovery module 835 may be configured to receive the direct sequence spread spectrum signal, in step 905. More particularly, the multi-chip recovery module 835 may receive the I & Q signal samples of the received direct sequence spread spectrum signal (e.g., the C/A code) from the carrier demodulator 835.

In step 910, the multi-chip recovery module 835 may perform the three-chip recovery processes on the signal samples. More specifically, a center, left and right portion of the recovered waveform are obtained from the I and Q signal samples. As described earlier, the three one-chip recovery processes form the recovered waveform which is then forwarded to the analysis window processing module 845.

In step 915, the analysis window processing module 845 may be configured to apply overlapping analysis windows to the recovered elemental waveform. In step 920, as described previously, the analysis window processing module 845 may be configured to sum the values of the sub-segments, L3, C1, C2, C3, and R1. More particularly, using L3 as an illustrative example, the analysis window processing module 845 may sum the data contained in the L3 sub-segment and refer to this sum as $S_{L3}$. Similarly, the data contained in the respective sub-segments of C1-C3 and R1 are summed as $S_{C1}$, $S_{C2}$, and $S_{R1}$, respectively. The five sums may be referred to as a reduced array of I and Q values, which is then forwarded to the power-based code alignment discriminator 860.

In step 925, the power-based discriminator 860 may be configured to determine an alignment factor for the received GPS signal. More specifically, the power-based discriminator 860 may apply the sums of the sub-segments into equation 19 or 20 as previously described. The power-based discriminator 860 may then forward the alignment factor to the code loop filter for further processing.

Certain embodiments may be performed as a computer program. The computer program may exist in a variety of forms both active and inactive. For example, the computer program can exist as software program(s) comprised of program instructions in source code, object code, executable code or other formats; firmware program(s); or hardware description language (HDL) files. Any of the above can be embodied on a computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), and magnetic or optical disks or tapes. Exemplary computer readable signals, whether modulated using a carrier or not, are signals that a computer system hosting or running the present invention can be configured to access, including signals downloaded through the Internet or other networks. Concrete examples of the foregoing include distribution of executable software program(s) of the computer program on a CD-ROM or via Internet download. In a sense, the Internet itself, as an abstract entity, is a computer readable medium. The same is true of computer networks in general.

While the invention has been described with reference to the exemplary embodiments thereof, those skilled in the art will be able to make various modifications to the described embodiments without departing from the true spirit and scope. The terms and descriptions used herein are set forth by way of illustration only and are not meant as limitations. In particular, although the method has been described by examples, the steps of the method may be performed in a different order than illustrated or simultaneously. Those skilled in the art will recognize that these and other variations are possible within the spirit and scope as defined in the following claims and their equivalents.

**Claims**

1. A method (900) of processing direct-sequence spread spectrum signals for temporal alignment between a received direct sequence spread spectrum (DSSS) signal and a local reference signal, the method comprising:

   receiving the received DSSS signal with bandwidth to resolve at least N samples per code chip (905);
   de-spreading the received DSSS signal to recover an elemental waveform within the received DSSS signal for an interval greater than one code chip interval as a first processing stage (910);
   determining a discriminator value based on the elemental waveform as a second processing stage (920); and
   operating a delay-locked loop based on the discriminator value to adjust an argument between the received DSSS signal and the local reference signal (925)
   providing for m accumulators (835), each accumulator is associated with a sample position in the recovered elemental waveform;
   multiplying the nth sample of the received DSSS signal after the start of each chip in the local reference code times the present value of the local reference code, where n = 1 to m;
   accumulating in the nth accumulator the product of the nth sample of the received DSSS signal after the start of each chip in the local reference code times the present value of the local reference code for every chip in the code epoch; and
   providing the resulting contents of the m accumulators (835) as a central portion of the recovered elemental waveform.

2. The method of claim 1, further comprising:

   advancing the local reference code by one chip interval to produce an early local reference code (840);
   providing for a second set of m accumulators (835), each accumulator is associated with a sample position in the recovered elemental waveform;

multiplying the nth sample of the received DSSS signal after the start of each chip in the local reference code times the present value of the early local reference code, where n = 1 to m;

accumulating in the nth accumulator of the second set of m accumulators the product of the nth sample of the received DSSS signal after the start of each chip in the local reference code times the present value of the early local reference code for every chip in the code epoch;

providing the resulting contents of the m accumulators as a left portion of the recovered elemental waveform;

delaying the local reference code by one chip interval to produce a delayed local reference code (840);

providing for a third set of m accumulators (835), each accumulator is associated with a sample position in the recovered elemental waveform;

multiplying the nth sample of the received DSSS signal after the start of each chip in the local reference code times the present value of the delayed local reference code, where n = 1 to m:

accumulating in the nth accumulator of the third set of m accumulators the product of the nth sample of the received DSSS signal after the start of each chip in the local reference code times the present value of the delayed local reference code for every chip in the code epoch;

providing the resulting contents of the m accumulators as a right portion of the recovered elemental waveform; and

concatenating the left portion, central portion and right portion as the recovered elemental waveform.

3. The method of claim 2, wherein the second stage processing further comprises:

overlaying three overlapping analysis windows on the recovered elemental waveform (845), each analysis window one chip wide;

forming a plurality of subregions within the three overlapping analysis windows over the recovered elemental waveform;

summing the values in each of the plurality of subregions within the recovered elemental waveform to form a respective intermediate sum;

designating a first subregion as L3;

designating a second subregion as C1;

designating a third subregion as C2;

designating a fourth subregion as C3;

designating a fifth subregion as R1;

summing the accumulator values that span L3 as a first intermediate sum, $S_{L3}$;

summing the accumulator values that span C1 as a second intermediate sum, $S_{C1}$;

summing the accumulator values that span C2 as a third intermediate sum, $S_{C2}$;

summing the accumulator values that span C3 as a fourth intermediate sum, $S_{C3}$; and

summing the accumulator values that span R1 as a fifth intermediate sum, $S_{R1}$, wherein the discriminator value is one of

$$\frac{\Delta(2-\Delta)\mathrm{Re}\left[\left(S_{C3}^{*}+S_{R1}^{*}\right)\left(2S_{C2}+S_{C3}+S_{R1}\right)-\left(S_{L3}^{*}+S_{C1}^{*}\right)\left(S_{L3}+S_{C1}+2S_{C2}\right)\right]}{\Delta\mathrm{Re}\left[S_{C3}^{*}\left(2\left(S_{C1}+S_{C2}\right)+S_{C3}\right)-S_{L3}^{*}\left(S_{L3}+2\left(S_{C1}+S_{C2}\right)\right)\right]+(2-\Delta)\mathrm{Re}\left[S_{R1}^{*}\left(2\left(S_{C2}+S_{C3}\right)+S_{R1}\right)-S_{C1}^{*}\left(S_{C1}+2\left(S_{C2}+S_{C3}\right)\right)\right]}$$

when

$$\mathrm{Re}\left[\left(S_{C3}^{*}+S_{R1}^{*}\right)\left(2S_{C2}+S_{C3}+S_{R1}\right)-\left(S_{L3}^{*}+S_{C1}^{*}\right)\left(S_{L3}+S_{C1}+2S_{C2}\right)\right]\le 0$$

and

$$\frac{\Delta(2-\Delta)\mathrm{Re}\left[\left(S_{C3}^{*}+S_{R1}^{*}\right)\left(2S_{C2}+S_{C3}+S_{R1}\right)-\left(S_{L3}^{*}+S_{C1}^{*}\right)\left(S_{L3}+S_{C1}+2S_{C2}\right)\right]}{\Delta\mathrm{Re}\left[S_{C1}^{*}\left(2\left(S_{C2}+S_{C3}\right)+S_{C1}\right)-S_{R1}^{*}\left(S_{R1}+2\left(S_{C2}+S_{C3}\right)\right)\right]+(2-\Delta)\mathrm{Re}\left[S_{L3}^{*}\left(2\left(S_{C1}+S_{C2}\right)+S_{L3}\right)-S_{C3}^{*}\left(S_{C3}+2\left(S_{C1}+S_{C2}\right)\right)\right]}$$

when

$$\mathrm{Re}\left[\left(S_{C3}^* + S_{R1}^*\right)\left(2S_{C2} + S_{C3} + S_{R1}\right) - \left(S_{L3}^* + S_{C1}^*\right)\left(S_{L3} + S_{C1} + 2S_{C2}\right)\right] > 0 \ .$$

100 ∼

W

**FIG. 1**

C

C/1023

W

**FIG. 2**

ω

W

**FIG. 3**

Cω/W

Cω/W1023

W

**FIG. 4**

FIG. 5A

FIG. 5B

FIG. 6

**FIG. 7**

FIG. 8

EP 1 808 967 A1

900

```
┌─────────────────────────┐
│  RECEIVE SPREAD SPECTRUM │  ⌐905
│        SIGNAL            │
└─────────────────────────┘
            │
            ▼
┌─────────────────────────┐
│   PERFORM ELEMENTAL      │  ⌐910
│  WAVEFORM RECOVERY       │
│       PROCESS            │
└─────────────────────────┘
            │
            ▼
┌─────────────────────────┐
│  APPLY ANALYSIS WINDOWS  │  ⌐915
│ TO DATA SET FROM ELEMENTAL│
│   WAVEFORM RECOVERY      │
│       PROCESS            │
└─────────────────────────┘
            │
            ▼
┌─────────────────────────┐
│     SUM SUBSEGMENTS      │  ⌐920
└─────────────────────────┘
            │
            ▼
┌─────────────────────────┐
│   DETERMINE ALIGNMENT    │  ⌐925
└─────────────────────────┘
```

FIG. 9

| | European Patent Office | EUROPEAN SEARCH REPORT | Application Number EP 07 10 0502 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 95/14937 A (NOVATEL COMMUNICATIONS LTD [CA]) 1 June 1995 (1995-06-01) * figures 2-4 * * page 14, line 12 - page 18, line 17 * ----- | 1,2 | INV. H04B1/707 G01S1/00 |
| | | | TECHNICAL FIELDS SEARCHED (IPC) |
| | | | H04B G01S |

The present search report has been drawn up for all claims

| Place of search | Date of completion of the search | Examiner |
|---|---|---|
| The Hague | 20 April 2007 | Amadei, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 10 0502

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2007

| Patent document cited in search report | | Publication date | Patent family member(s) | | Publication date |
|---|---|---|---|---|---|
| WO 9514937 | A | 01-06-1995 | AU | 8137894 A | 13-06-1995 |
| | | | CA | 2162926 A1 | 01-06-1995 |
| | | | CN | 1128064 A | 31-07-1996 |
| | | | JP | 9505404 T | 27-05-1997 |

EPO FORM P0459

For more details about this annex : see Official Journal of the European Patent Office, No. 12/82